# EUROPÄISCHE PATENTANMELDUNG

(11) **EP 2 048 441 A2**
(43) Veröffentlichungstag der Anmeldung: **15.04.2009**
(21) Anmeldenummer: 08013298.8
(22) Anmeldetag: 24.07.2008
(51) Int. Cl.: F23J 15/02, F23J 15/06

(54) **Wärmetauschervorrichtung**

(30) Priorität: 10.10.2007 DE 102007048450
(71) Anmelder: Bomat Heiztechnik GmbH, 88662 Überlingen (DE)
(72) Erfinder: Bommer, Rolf, 88662 Überlingen (DE)
(74) Vertreter: Daub, Thomas

(57) **Zusammenfassung**

Es wird eine Wärmetauschervorrichtung, insbesondere für thermische Prozesse mit erhöhtem Feinstaubanteil, insbesondere für ein Blockheizkraftwerk, mit wenigstens einem Abgaseinlassmittel (10; 10a) und wenigstens einem Abgasauslassmittel (12; 12a) sowie wenigstens einer zwischengeschalteten Abgasreinigungseinheit (14; 14a) vorgeschlagen, die zur Bildung eines von einem Abgas (16; 16a) zu durchquerenden Flüssigkeitsbereichs (18; 18a) vorgesehen ist.

## Beschreibung

### Stand der Technik

Es sind bereits Wärmetauschervorrichtungen, insbesondere für Blockheizkraftwerke, mit einem Abgaseinlassmittel und einem Abgasauslassmittel bekannt.

### Vorteile der Erfindung

Es wird eine Wärmetauschervorrichtung vorgeschlagen, insbesondere für ein Blockheizkraftwerk und/oder für thermische Prozesse mit erhöhtem Feinstaubanteil und/oder Feuerungen mit festem und/oder flüssigem Brennstoff, die wenigstens ein Abgaseinlassmittel und wenigstens ein Abgasauslassmittel sowie wenigstens eine zwischengeschaltete Abgasreinigungseinheit umfasst, die zur Bildung eines von Abgas zu durchquerenden Flüssigkeitsbereichs vorgesehen ist. Dabei soll unter einem "Abgaseinlassmittel" bzw. einem "Abgasauslassmittel" insbesondere ein Mittel verstanden werden, über das bei Verbrennungsprozessen entstehende Abgase der Wärmetauschervorrichtung zugeführt bzw. aus dieser wieder abgeführt werden können, wie insbesondere Kanalmittel. Ferner soll unter "zur Bildung eines vom Abgas zu durchquerenden Flüssigkeitsbereichs vorgesehen" insbesondere verstanden werden, dass die Abgasreinigungseinheit speziell ausgestattet und/oder ausgebildet ist, so dass sich während des Betriebs ein Flüssigkeitsbereich bildet, durch den das Abgas im Betrieb hindurchgeführt wird.

Durch eine entsprechende Ausgestaltung kann konstruktiv einfach eine vorteilhafte Abscheidung von gasförmigen, flüssigen und/oder festen Luftschadstoffen (gasförmig z.B.: CO₂, SO₂, NOX, usw.; flüssig z.B. schwefelige Säure H₂SO₄, salpetrige Säure HNO₃ sowie unverbrannte Kohlenwasserstoffe; feste Schadstoffe z.B.: Feinstaub, Rußpartikel, Schwefelpartikel, Rostpartikel und Partikel aus unverbrannten Kohlenwasserstoffen) aus dem Abgas erreicht werden und Luftschadstoffe können vermindert werden.

Der Flüssigkeitsbereich kann dabei besonders vorteilhaft von einer Flüssigkeitsdickschicht gebildet sein, wodurch ohne zusätzliche Bauteile eine besonders vorteilhafte Reinigung erreicht werden kann. Unter einer "Flüssigkeitsdickschicht" soll insbesondere eine Flüssigkeitsschicht verstanden werden, die insbesondere in Durchströmungsrichtung eine Dicke bzw. eine Erstreckung größer als 5 mm, vorzugsweise größer als 10 mm und besonders vorteilhaft größer als 20 mm aufweist.

Ferner wird vorgeschlagen, dass im Flüssigkeitsbereich zur Benetzung vorgesehene Füllkörper angeordnet sind, wodurch ebenfalls eine vorteilhafte Reinigung erreicht werden kann, und zwar insbesondere, wenn die Füllkörper durch eine poröse Ausgestaltung eine gezielt vergrößerte Oberfläche aufweisen, und insbesondere, wenn zumindest ein Füllkörper zumindest teilweise aus einem keramischen Werkstoff gebildet ist. Die Füllkörper können dabei in einer Flüssigkeitsdickschicht angeordnet und von dieser benetzt sein und/oder können ohne eine Flüssigkeitsdickschicht und/oder außerhalb einer Flüssigkeitsdickschicht, insbesondere von Flüssigkeitstropfen, benetzt sein, die einmalig, zeitweise und/oder auch kontinuierlich auf die Füllkörper aufgebracht werden können. Bei der Vermeidung einer Flüssigkeitsdickschicht kann vorteilhaft das Abgas mit geringem Druckaufbau durch den Flüssigkeitsbereich hindurch geführt werden.

Ferner kann der Reinigungsvorgang unterstützt werden, wenn die Wärmetauschervorrichtung eine Rühr- und/oder Mischvorrichtung aufweist, die insbesondere dazu vorgesehen ist, die Flüssigkeitsdickschicht und/oder die Füllkörper zu bewegen.

Die Flüssigkeit kann dabei von verschiedenen, dem Fachmann als sinnvoll erscheinenden Medien gebildet sein, besonders vorteilhaft ist die Flüssigkeit jedoch zumindest zum Großteil von Wasser gebildet.

Weist die Wärmetauschervorrichtung wenigstens eine Düseneinheit auf, durch die das Abgas im Betrieb geführt ist, kann eine besonders vorteilhafte Abscheidung von Luftschadstoffen erreicht werden, und zwar insbesondere, wenn die Düseneinheit in einem Flüssigkeitsschichtbereich, d.h. in einem Bereich, in dem sich die Flüssigkeitsdickschicht während des Betriebs einstellt, angeordnet ist. Unter einer "Düseneinheit" soll dabei insbesondere eine Einheit verstanden werden, die zumindest eine Düse aufweist, die gegenüber einem in Strömungsrichtung vorgeschalteten Bereich einen wesentlich kleineren Strömungsquerschnitt aufweist und/oder sich selbst in Strömungsrichtung verjüngt.

In einer weiteren Ausgestaltung der Erfindung wird vorgeschlagen, dass die Wärmetauschervorrichtung wenigstens zwei Behälter und wenigstens eine die Behälter verbindende Leitung umfasst, wodurch die Wärmetauschervorrichtung konstruktiv einfach, flexibel und insbesondere wartungsfreundlich gestaltet werden kann, und zwar insbesondere, wenn die Leitung einen Teil der Abgasreinigungseinheit zur Bildung der Flüssigkeitsdickschicht bildet bzw. die Leitung dazu vorgesehen ist, dass sich in der Leitung im Betrieb zumindest teilweise die Flüssigkeitsdickschicht bildet. Unter einer "Leitung" soll dabei insbesondere ein Kanal verstanden werden, der gegenüber dem Behälter einen kleineren Querschnitt aufweist.

Ferner können einer der beiden Behälter oder vorzugsweise beide Behälter als Wärmetauscher genutzt werden, indem wenigstens einer und vorzugsweise beide Behälter wenigstens ein Mediumeintrittsmittel und wenigstens ein Mediumaustrittsmittel für ein zu erwärmendes Medium aufweisen.

Vorzugsweise weist die Wärmetauschervorrichtung eine in einem Bodenbereich angeordnete Reinigungseinheit auf, die zum Ablassen von verschmutzter Flüssigkeit vorgesehen ist, wodurch mit geringem Aufwand, vorzugsweise sogar während des Betriebs, eine Reinigung bzw. eine Entschlammung durchgeführt werden kann. Unter einer Anordnung im "Bodenbereich" soll dabei insbesondere verstanden werden, dass die Reinigungseinheit in einem Bereich angeordnet ist, in dem sich gravitationsbedingt, d.h. in einem, im Betriebszustand betrachtet, unteren Bereich insbesondere eines Kanals, Bestandteile ablagern.

In einer weiteren Ausgestaltung der Erfindung wird vorgeschlagen, dass die Wärmetauschervorrichtung eine Regel-und/oder Steuereinheit zur Einstellung einer Flüssigkeitsmenge aufweist, wodurch vorteilhaft ein zumindest teilautomatisierter Prozess erzielt und ein Wartungsaufwand reduziert werden kann.

Weist die Wärmetauschervorrichtung einen Flüssigkeitsüberlauf auf, kann das Flüssigkeitsvolumen einfach auf einen maximalen Wert begrenzt werden. Vorzugsweise weist dabei der Flüssigkeitsüberlauf eine Flüssigkeitsgassperre auf, so dass ein unerwünschter Austritt von Gasen über den Flüssigkeitsüberlauf einfach vermieden werden kann.

Ferner wird vorgeschlagen, dass die Wärmetauschervorrichtung eine Zugabeeinheit, insbesondere eine Neutralisationseinheit, aufweist, die zur Zugabe eines weiteren Mediums zu der die Flüssigkeitsdickschicht bildenden Flüssigkeit vorgesehen ist, wodurch insbesondere die Kontinuität verbessert werden kann. Das weitere Medium kann dabei kontinuierlich oder vorteilhaft intervallmäßig zugegeben werden. Hierzu wird vorteilhaft das Flüssigkeitsniveau der die Flüssigkeitsdickschicht bildenden Flüssigkeit abgesenkt. Unter einem "weiteren Medium" soll dabei insbesondere ein Mittel verstanden werden, das sich in der Zusammensetzung von der die Flüssigkeitsdickschicht bildenden Flüssigkeit unterscheidet.

Weist die Wärmetauschervorrichtung wenigstens eine Fördereinheit zur Beförderung des Abgases auf, wie insbesondere eine Ventilatoreinheit, eine Pumpe usw., können Druckverluste ausgeglichen werden und insbesondere kann das Abgas vorteilhaft aus der Wärmetauschervorrichtung abtransportiert werden.

Vorzugsweise weist die Fördereinheit dabei wenigstens eine Einstelleinheit zur Einstellung eines Fördervolumens des Abgases auf, wodurch der Prozess vorteilhaft abhängig von vorliegenden Parametern eingestellt werden kann. Die Einstelleinheit kann von verschiedenen, dem Fachmann als sinnvoll erscheinenden Einheiten gebildet sein, konstruktiv einfach kann dieselbe jedoch mit einem Kanalmittel erreicht werden, über das Fremdluft zugeführt werden kann. Dabei kann die Fremdluft zudem vorteilhaft zur Trocknung des Abgases genutzt werden.

Weist die Fördereinheit wenigstens einen Sensor auf, kann eine vorteilhafte Überwachung und/oder Regelung erreicht werden.

### Zeichnung

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Beschreibung der Ausführungsbeispiele

Dabei zeigen:
- Fig. 1: eine schematisch dargestellte Wärmetauschervorrichtung und
- Fig. 2: eine alternative Wärmetauschervorrichtung.

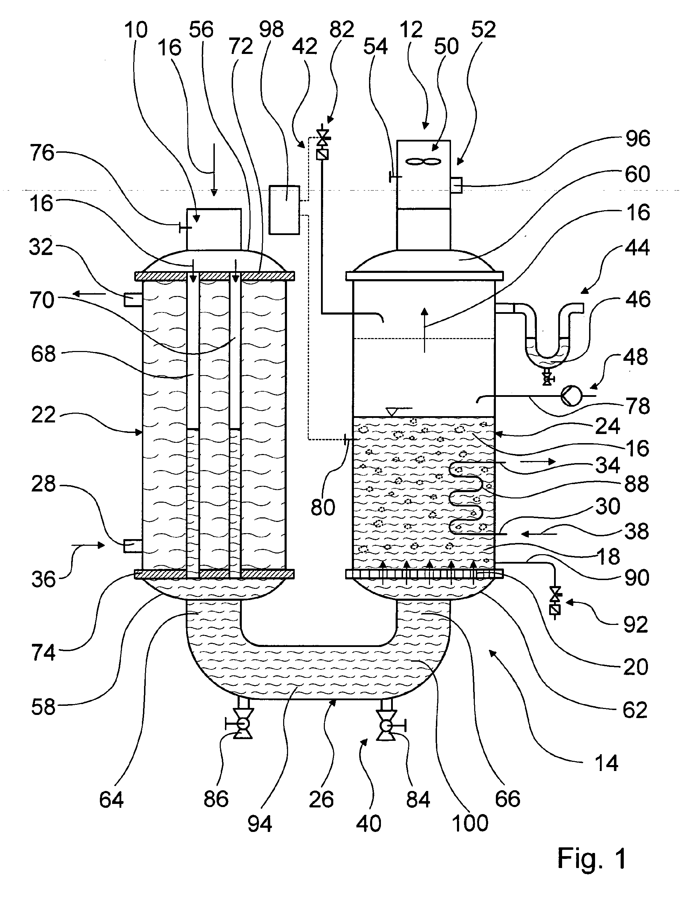

Figur 1 zeigt eine schematisch dargestellte Wärmetauschervorrichtung für ein Blockheizkraftwerk und/oder für thermische Prozesse, beispielsweise auch mit Holz, mit einem von einem Einlasskanal gebildeten Abgaseinlassmittel 10 und einem von einem Auslasskanal gebildeten Abgasauslassmittel 12. Ferner weist die Wärmetauschervorrichtung eine zwischen dem Abgaseinlassmittel 10 und dem Abgasauslassmittel 12 zwischengeschaltete Abgasreinigungseinheit 14 auf, die zur Bildung einer von einem der Wärmetauschervorrichtung zugeführten Abgas 16 zu durchquerenden Flüssigkeitsbereich 18 vorgesehen ist, wobei der Flüssigkeitsbereich 18 von einer im Wesentlichen von Wasser gebildeten Flüssigkeitsdickschicht 100 mit gebildet ist, die in Durchströmungsrichtung eine Dicke von mehreren Zentimetern aufweist.

Die Wärmetauschervorrichtung umfasst einen ersten zylinderförmigen, senkrecht aufgestellten Behälter 22 mit einem Deckel 56 und einem Bodenteil 58 und einen zweiten zylinderförmigen, senkrecht aufgestellten Behälter 24 mit einem Deckel 60 und einem Bodenteil 62. Der Deckel 56 des ersten Behälters 22 bildet das Abgaseinlassmittel 10 und der Deckel 60 des zweiten Behälters 24 bildet das Abgasauslassmittel 12. Die Behälter 22, 24 sind über eine Leitung 26 verbunden. Die Leitung 26 schließt jeweils, im Betriebszustand betrachtet, mit vertikal ausgerichteten Leitungsabschnitten 64, 66 von unten an die Bodenteile 58, 62 an, wobei die vertikalen Leitungsabschnitte 64, 66 über einen horizontal ausgerichteten Leitungsabschnitt 94 der Leitung 26 verbunden sind. Die Leitung 26 bildet einen Teil der Abgasreinigungseinheit 14 zur Bildung der Flüssigkeitsdickschicht 100 während des Betriebs.

Im ersten Behälter 22 sind Wärmetauscherrohre 68, 70 angeordnet, die sich in Längsrichtung durch den ersten Behälter 22 erstrecken und im Deckel 56 in einer Halteplatte 72 und im Bodenteil 58 in einer Halteplatte 74 befestigt bzw. spannungsfrei dicht gelagert sind. Die Wärmetauscherrohre 68, 70 erstrecken sich jeweils durch die Halteplatten 72, 74 hindurch. Ferner umfasst der erste Behälter 22 im unteren Bereich ein von einem Eintrittskanal gebildetes Mediumeintrittsmittel 28 und im oberen Bereich ein von einem Austrittskanal gebildetes Mediumaustrittsmittel 32 für ein zu erwärmendes, von Wasser gebildetes Medium 36. Im Deckel 56 des ersten Behälters 22 bzw. im Abgaseinlassmittel 10 ist zudem ein Temperatursensor 76 angeordnet, so dass eine vorteilhafte Temperaturüberwachung erreicht und bei Überschreiten einer maximal zulässigen Temperatur die Wärmetauschervorrichtung abgeschaltet werden kann.

Der zweite Behälter 24 umfasst in seinem Bodenbereich eine mehrere Düsen aufweisende Düseneinheit 20, die in einem Flüssigkeitsschichtbereich der Abgasreinigungseinheit 14 angeordnet ist bzw. in einem Bereich, in dem sich bei einem konventionellen Betrieb die Flüssigkeitsdickschicht 100 einstellt. Zudem umfasst der zweite Behälter 24 im Flüssigkeitsschichtbereich ein von einem Eintrittskanal gebildetes Mediumeintrittsmittel 30, ein von einem Austrittskanal gebildetes Mediumaustrittsmittel 34 und einen das Mediumeintrittsmittel 30 und das Mediumaustrittsmittel 34 verbindenden Kanal 88 für ein zu erwärmendes, von Wasser gebildetes Medium 38.

Ferner umfasst die Wärmetauschervorrichtung eine von einer Neutralisationseinheit gebildete Zugabeeinheit 48, die einen in den zweiten Behälter 24 hineinragenden Kanal 78 aufweist und die zur Zugabe von Neutralisationsmittel zu der die Flüssigkeitsdickschicht 100 bildenden Flüssigkeit vorgesehen ist. Im oberen Bereich des zweiten Behälters 24 ist ein Flüssigkeitsüberlauf 44 mit einer von einem Rohrknie gebildeten Flüssigkeitsgassperre 46 angeordnet. Die Flüssigkeitsgassperre 46 ist im gezeigten Ausführungsbeispiel außerhalb des zweiten Behälters 24 angeordnet, könnte jedoch auch innerhalb des zweiten Behälters 24 angeordnet sein.

Um stets eine gewünschte Flüssigkeitsmenge zur Bildung der Flüssigkeitsdickschicht 100 zu gewährleisten, weist die Wärmetauschervorrichtung eine Regeleinheit 42 zur Einstellung der Flüssigkeitsmenge auf. Die Regeleinheit 42 umfasst eine Recheneinheit 98, einen Füllstandssensor 80 und ein abhängig von einer mittels des Füllstandssensors 80 erfassten Kenngröße geregeltes Magnetventil 82, über das Speisewasser dem zweiten Behälter 24 bei Bedarf zugeführt werden kann.

In dem vom Auslasskanal gebildeten Abgasauslassmittel 12 ist eine von einer Ventilatoreinheit gebildete Fördereinheit 50 zur Beförderung des Abgases 16 durch das Abgasauslassmittel 12 nach außen vorgesehen. Die Fördereinheit 50 umfasst eine Einstelleinheit 52, zur Einstellung eines Fördervolumens des Abgases bzw. zur Zugbegrenzung auf einer Saugseite der Fördereinheit 50. Die Einstelleinheit 52 umfasst einen Kanal 96, über den Fremdluft, insbesondere auch zur Trocknung des Abgases 16, zugeführt werden kann. Ferner umfasst die Fördereinheit 50 einen Drucksensor 54, mittels dessen Kenngrößen für einen Druck im Abgasauslassmittel 12 erfasst, der Druck überwacht und gezielt mit der Einstelleinheit 52 automatisch mit einer nicht näher dargestellten Regeleinheit eingestellt werden kann.

In einem Bodenbereich, d.h. in einem unteren Bereich der Leitung 26, ist eine Reinigungseinheit 40 mit zwei Kugelhähnen 84, 86 angeordnet, mittels derer verschmutzte Flüssigkeit abgelassen bzw. die Leitung 26 entschlammt werden kann.

Vor einer Inbetriebnahme wird Wasser über das Magnetventil 82 in den zweiten Behälter 24 eingefüllt, und zwar, bis die Wärmetauscherrohre 68, 70 teilweise, die Leitung 26 vollständig und der zweite Behälter 24 teilweise mit Wasser bzw. mit der die Flüssigkeitsdickschicht 100 bildenden Flüssigkeit gefüllt sind. Um unerwünschte Reaktionen zwischen der die Flüssigkeitsdickschicht 100 bildenden Flüssigkeit und den Wärmetauscherrohren 68, 70 zu vermeiden, sind die Wärmetauscherrohre 68, 70 im Hinblick auf die Flüssigkeit korrosionsbeständig und geben im Betrieb keine Metallbestandteile, wie insbesondere Chrom, Nickel oder Aluminium, an die die Flüssigkeitsdickschicht 100 bildende Flüssigkeit ab.

Wird das Abgas 16 über das Abgaseinlassmittel 10 in die Wärmetauscherrohre 68, 70 eingeleitet, wird die Flüssigkeit in den Wärmetauscherrohren 68, 70 und in der Leitung 26 so weit verdrängt, bis das Abgas 16 durch die Flüssigkeitsdickschicht 100 und durch die Düseneinheit 20, angeordnet in der Flüssigkeitsdickschicht 100, in einen oberen Bereich des zweiten Behälters 24 gelangen kann und von dort das Abgas 16 mittels der Fördereinheit 50 abgesaugt wird. Die Flüssigkeitsdickschicht 100 bildet sich dabei insbesondere im zweiten Behälter 24 und, abhängig vom Druck, vorzugsweise auch in der Leitung 26 aus. Während des Prozesses wird das von Wasser gebildete Medium 36 durch das Mediumeintrittsmittel 28 in den ersten Behälter 22 und über das Mediumaustrittsmittel 32 aus dem ersten Behälter 22 abgeführt. Dabei werden die Wärmetauscherrohre 68, 70 umspült und das Medium 36 wird z.B. von 30°C auf 40°C erwärmt. Ferner wird das von Wasser gebildete Medium 38 durch das Mediumeintrittsmittel 28 in den im zweiten Behälter 24 in der Flüssigkeitsdickschicht 100 angeordneten Kanal 88 und über das Mediumaustrittsmittel 32 aus dem Kanal 88 abgeführt. Dabei wird das Medium 38 durch die von der Flüssigkeitsdickschicht 100 abgegebene Wärme erwärmt.

Wird mittels eines nicht näher dargestellten Sensors erkannt, dass insbesondere eine Neutralisation der die Flüssigkeitsdickschicht 100 bildenden Flüssigkeit erforderlich ist, wird über einen Auslasskanal 90 und über ein steuerbares Magnetventil 92 Flüssigkeit abgelassen und über die Zugabeeinheit 48 insbesondere Neutralisationsmittel dem zweiten Behälter 24 zugeführt, um eine Neutralisation und/oder eine Senkung von Schadstoffen, wie NOX, zu erreichen.

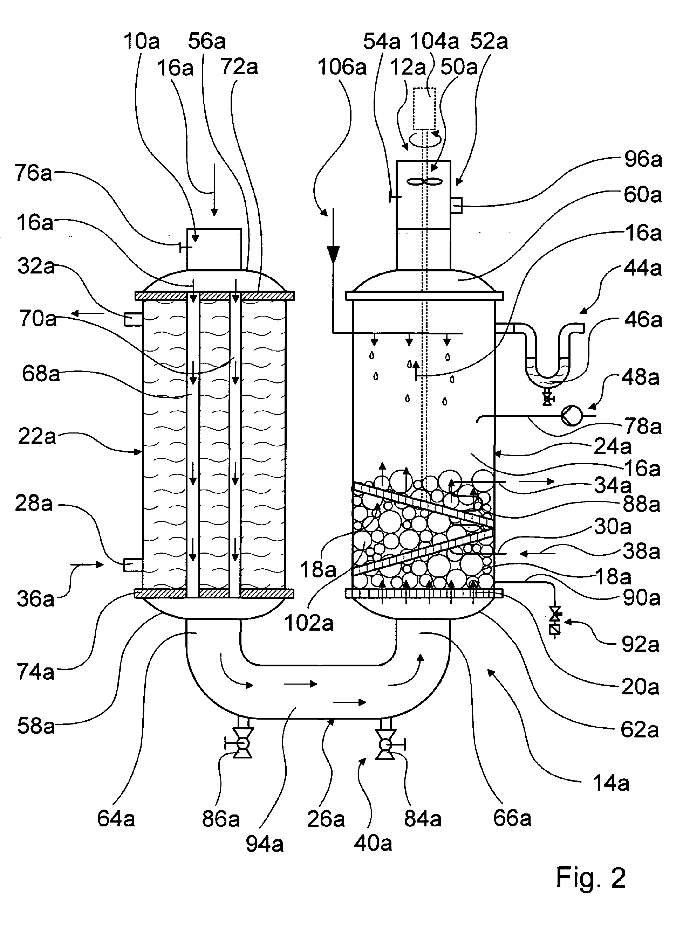

In Figur 2 ist eine alternative Wärmetauschervorrichtung dargestellt. Im Wesentlichen gleich bleibende Bauteile, Merkmale und Funktionen sind grundsätzlich mit den gleichen Bezugszeichen beziffert. Zur Unterscheidung der Ausführungsbeispiele sind jedoch den Bezugszeichen des Ausführungsbeispiels in Figur 2 der Buchstabe a hinzugefügt. Die nachfolgende Beschreibung beschränkt sich im Wesentlichen auf die Unterschiede zu dem Ausführungsbeispiel in Figur 1, wobei bezüglich gleich bleibender Bauteile, Merkmale und Funktionen auf die Beschreibung des Ausführungsbeispiels in Figur 1 verwiesen werden kann.

Die Wärmetauschervorrichtung in Figur 2 weist einen Flüssigkeitsbereich 18a mit zur Benetzung vorgesehener Füllkörper 102a auf, die aus einem keramischen Werkstoff gebildet sind.

Im Betrieb wird Abgas 16a durch Wärmetauscherrohre 68a, 70a eines Behälters 22a, durch eine Leitung 26a sowie durch eine Düseneinheit 20a in den Flüssigkeitsbereich 18a in einem Behälter 24a und zur Reinigung des Abgases 16a durch den Flüssigkeitsbereich 18a an den mit Flüssigkeit benetzten Füllkörpern 102a vorbei geführt.

Die Füllkörper 102a werden im Betrieb von einer Benetzungseinheit 106a im Behälter 24a von oben benetzt.

Ferner umfasst die Wärmetauschervorrichtung eine Rührvorrichtung 104a, mittels der die Füllkörper 102a im Behälter 24a rotierend bewegt werden können.

### Bezugszeichen

| | | | |
|---|---|---|---|
| 10 | Abgaseinlassmittel | 60 | Deckel |
| 12 | Abgasauslassmittel | 62 | Bodenteil |
| 14 | Abgasreinigungseinheit | 64 | Leitungsabschnitt |
| 16 | Abgas | 66 | Leitungsabschnitt |
| 18 | Flüssigkeitsbereich | 68 | Wärmetauscherrohr |
| 20 | Düseneinheit | 70 | Wärmetauscherrohr |
| 22 | Behälter | 72 | Halteplatte |
| 24 | Behälter | 74 | Halteplatte |
| 26 | Leitung | 76 | Temperatursensor |
| 28 | Mediumeintrittsmittel | 78 | Kanal |
| 30 | Mediumeintrittsmittel | 80 | Füllstandssensor |
| 32 | Mediumaustrittsmittel | 82 | Magnetventil |
| 34 | Mediumaustrittsmittel | 84 | Kugelhahn |
| 36 | Medium | 86 | Kugelhahn |
| 38 | Medium | 88 | Kanal |
| 40 | Reinigungseinheit | 90 | Auslasskanal |
| 42 | Regel- und/oder Steuer- | 92 | Magnetventil |
| | einheit | 94 | Leitungsabschnitt |
| 44 | Flüssigkeitsüberlauf | 96 | Kanal |
| 46 | Flüssigkeitsgassperre | 98 | Recheneinheit |
| 48 | Zugabeeinheit | 100 | Flüssigkeitsdickschicht |
| 50 | Fördereinheit | 102 | Füllkörper |
| 52 | Einstelleinheit | 104 | Rührvorrichtung |
| 54 | Sensor | 106 | Benetzungseinheit |
| 56 | Deckel | | |
| 58 | Bodenteil | | |

## Patentansprüche

1. Wärmetauschervorrichtung, insbesondere für thermische Prozesse mit erhöhtem Feinstaubanteil, insbesondere für ein Blockheizkraftwerk, mit wenigstens einem Abgaseinlassmittel (10; 10a) und wenigstens einem Abgasauslassmittel (12; 12a) sowie wenigstens einer zwischengeschalteten Abgasreinigungseinheit (14; 14a), die zur Bildung eines von einem Abgas (16; 16a) zu durchquerenden Flüssigkeitsbereichs (18; 18a) vorgesehen ist.

2. Wärmetauschervorrichtung nach Anspruch 1,
**dadurch gekennzeichnet,**
**dass** der Flüssigkeitsbereich (18) von einer Flüssigkeitsdickschicht (100) gebildet ist.

3. Wärmetauschervorrichtung nach Anspruch 1 oder 2,
**gekennzeichnet durch**
im Flüssigkeitsbereich (18a) zur Benetzung vorgesehene Füllkörper (102a).

4. Wärmetauschervorrichtung nach Anspruch 3,
**dadurch gekennzeichnet,**
**dass** zumindest ein Füllkörper (102a) zumindest teilweise aus einem keramischen Werkstoff gebildet ist.

5. Wärmetauschervorrichtung nach einem der vorhergehenden Ansprüche,
**gekennzeichnet durch**
eine Rühr- und/oder Mischvorrichtung (104a).

6. Wärmetauschervorrichtung nach einem der vorhergehenden Ansprüche,
**gekennzeichnet durch**
wenigstens eine Düseneinheit (20; 20a), **durch** die das Abgas (16; 16a) im Betrieb geführt ist.

7. Wärmetauschervorrichtung nach Anspruch 6,
**dadurch gekennzeichnet,**
**dass** die Düseneinheit (20) in einem Flüssigkeitsschichtbereich der Abgasreinigungseinheit (14) angeordnet ist.

8. Wärmetauschervorrichtung nach einem der vorhergehenden Ansprüche,
**gekennzeichnet durch**
wenigstens zwei Behälter (22, 24; 22a, 24a) und wenigstens eine die Behälter (22, 24; 22a, 24a) verbindende Leitung (26; 26a).

9. Wärmetauschervorrichtung zumindest nach Anspruch 2 und Anspruch 8,
**dadurch gekennzeichnet,**
**dass** die Leitung (26) einen Teil der Abgasreinigungseinheit (14) zur Bildung der Flüssigkeitsdickschicht (100) bildet.

10. Wärmetauschervorrichtung nach Anspruch 8 oder 9,
**dadurch gekennzeichnet,**
**dass** wenigstens einer der beiden Behälter (22, 24; 22a, 24a) wenigstens ein Mediumeintrittsmittel (28, 30; 28a, 30a) und wenigstens ein Mediumaustrittsmittel (32, 34; 32a, 34a) für ein zu erwärmendes Medium (36, 38; 36a, 38a) aufweist.

11. Wärmetauschervorrichtung nach Anspruch 10,
**dadurch gekennzeichnet,**
**dass** beide Behälter (22, 24; 22a, 24a) jeweils wenigstens ein Mediumeintrittsmittel (28, 30; 28a, 30a) und wenigstens ein Mediumaustrittsmittel (32, 34; 32a, 34a) aufweisen.

12. Wärmetauschervorrichtung nach einem der vorhergehenden Ansprüche,
**gekennzeichnet durch**
eine in einem Bodenbereich angeordnete Reinigungseinheit (40; 40a), die zum Ablassen von verschmutzter Flüssigkeit vorgesehen ist.

13. Wärmetauschervorrichtung nach einem der vorhergehenden Ansprüche,
**gekennzeichnet durch**
eine Regel- und/oder Steuereinheit (42) zur Einstellung einer Flüssigkeitsmenge.

14. Wärmetauschervorrichtung nach einem der vorhergehenden Ansprüche,
**gekennzeichnet durch**
einen Flüssigkeitsüberlauf (44; 44a).

15. Wärmetauschervorrichtung nach Anspruch 14,
**dadurch gekennzeichnet,**
**das** der Flüssigkeitsüberlauf (44; 44a) eine Flüssigkeitsgassperre (46; 46a) aufweist.

16. Wärmetauschervorrichtung zumindest nach Anspruch 2,
**gekennzeichnet durch**
eine Zugabeeinheit (48), die zur Zugabe eines weiteren Mediums zu der die Flüssigkeitsdickschicht (100) bildenden Flüssigkeit vorgesehen ist.

17. Wärmetauschervorrichtung nach einem der vorhergehenden Ansprüche,
**gekennzeichnet durch**
wenigstens eine Fördereinheit (50; 50a) zur Beförderung des Abgases (16).

18. Wärmetauschervorrichtung nach Anspruch 17,
**dadurch gekennzeichnet,**
**dass** die Fördereinheit (50; 50a) wenigstens eine Einstelleinheit (52; 52a) zur Einstellung eines Fördervolumens des Abgases (16; 16a) aufweist.

19. Wärmetauschervorrichtung nach Anspruch 17 oder 18,
**dadurch gekennzeichnet,**
**dass** die Fördereinheit (50; 50a) wenigstens einen Sensor (54; 54a) aufweist.

20. Verfahren mit einer Wärmetauschervorrichtung, insbesondere nach einem der vorhergehenden Ansprüche, wobei Abgas (16; 16a) aus einem Verbrennungsprozess durch einen Flüssigkeitsbereich (18; 18a) geführt wird.

21. Verfahren nach Anspruch 20,
**dadurch gekennzeichnet,**
**dass** das Abgas (16) durch eine Flüssigkeitsdickschicht (100) geführt wird.

22. Verfahren nach Anspruch 20 oder 21,
**dadurch gekennzeichnet,**
**dass** das Abgas (16a) an mit einer Flüssigkeit benetzten Füllkörpern (102a) vorbei geführt wird.

23. Verfahren nach Anspruch 22,
**dadurch gekennzeichnet,**
**dass** das Abgas (16; 16a) durch wenigstens eine Düseneinheit (20; 20a) geführt wird.

24. Verfahren zumindest nach Anspruch 21 und 23,
**dadurch gekennzeichnet,**
**dass** das Abgas (16) in der Flüssigkeitsdickschicht (100) durch die Düseneinheit (20) geführt wird.

25. Verfahren nach einem der Ansprüche 22 bis 24,
**dadurch gekennzeichnet,**
**dass** die Flüssigkeitsmenge geregelt wird.

26. Verfahren zumindest nach Anspruch 21,
**dadurch gekennzeichnet,**
**dass** zu der die Flüssigkeitsdickschicht (100) bildenden Flüssigkeit ein weiteres Medium, insbesondere ein Neutralisationsmittel, hinzugeführt wird.

27. Verfahren nach Anspruch 26,
**dadurch gekennzeichnet,**
**dass** das Flüssigkeitsniveau der die Flüssigkeitsdickschicht (100) bildenden Flüssigkeit reduziert wird, um das weitere Medium hinzuzuführen.
